# EUROPEAN PATENT APPLICATION

(11) **EP 1 638 199 A1**
(43) Date of publication of application: **22.03.2006**
(21) Application number: 03736260.5
(22) Date of filing: 26.06.2003
(51) Int. Cl.: H02P 5/74, B63H 21/17, H02J 3/38, H02J 3/24

(54) **MOTOR DRIVE SYSTEM**

(71) Applicant: Toshiba Mitsubishi-Electric Industrial Systems Corporation, Minato-ku, Tokyo 108-0073 (JP)
(72) Inventor: TOYODA, Masaru, c/o Mitsubishi Denki K.K., Tokyo 100-8310 (JP); KOYAMA, Masato, c/o Mitsubishi Denki K.K., Tokyo 100-8310 (JP); KAMIYAMA, Isao, c/o Mitsubishi Denki K.K., Tokyo 100-8310 (JP)
(74) Representative: HOFFMANN EITLE
(86) International application number: PCT/JP2003/008116
(87) International publication number: WO 2005/002037

(57) **Abstract**

A motor drive system in which a plurality of generators (6 to 11) driven by mechanical power generation apparatuses (1 to 5) are connected in parallel to a common distribution bus (12), and plural power conversion devices (61) connected to the common distribution bus (12) and output an AC power of a variable amplitude and a variable frequency drive plural electric motors (23 to 27) that drive load machines (33 to 36). Each power conversion device (61) includes a frequency control device for controlling a frequency of the common distribution bus (12) to be a predetermined value by controlling an active power to be exchanged between each power conversion device (61) and the common distribution bus (12). The power conversion device (61) further includes a DC voltage control device for controlling so that an output DC voltage of a converter (81) may be a predetermined value by controlling an active power to be exchanged between each power conversion device (61) and each motor (23 to 27).

## Description

### Technical Field

The present invention relates to a motor drive system in which a plurality of generators of which power source are mechanical power generation apparatus are connected in parallel to a common distribution bus, and power conversion devices, which operate a plurality of electric motors to drive load machines at variable speeds, are connected in parallel to the common distribution bus.

### Background Art

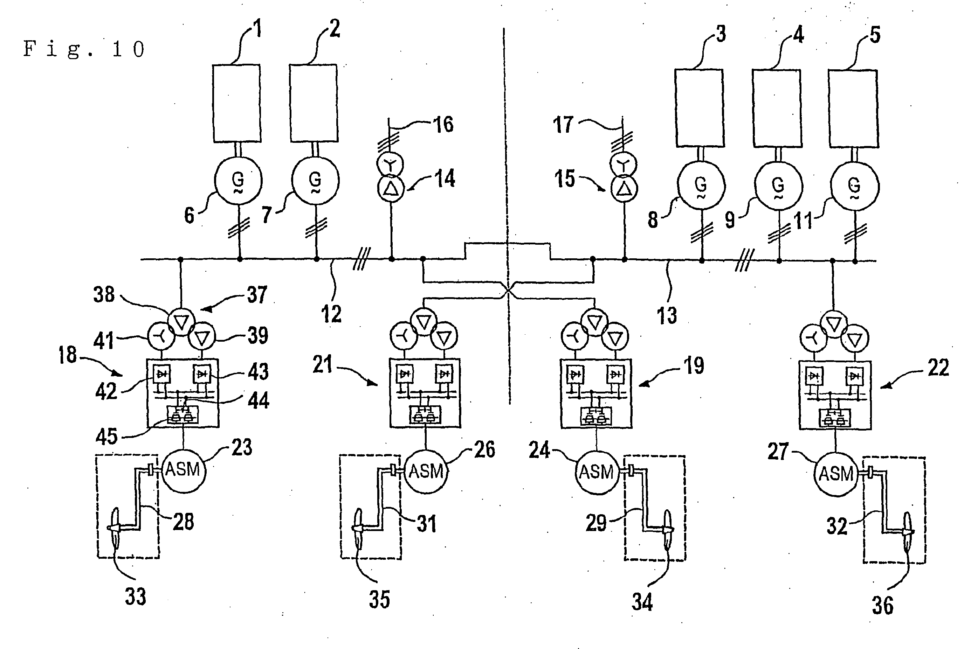

Fig. 10 is a schematic view showing a conventional motor drive system for marine electric propulsion that is disclosed in the international publication No. WO02/100716A1.

In the drawing, screws 33 to 36 are driven at variable speeds by induction motors 23 to 27 via rotary shafts 28 to 32 respectively. Although the induction motors 23 to 27 are driven at variable speeds by power conversion devices 18 to 22 respectively, an electric power required for driving at variable speeds is supplied from common distribution buses 12, 13 via a transformer 37. To the common distribution buses 12, 13, output terminals of generators 6 to 11 that are driven by diesel engines 1 to 5 are connected. Further, numeral 38 designates a primary winding of the transformer 37, and numerals 39, 41 designate secondary windings of the transformer 37. Numerals 42, 43 designate rectifiers. Numeral 44 designates a capacitor. Numeral 45 designates an inverter.

In such system arrangement, mechanical powers, which the diesel engines 1 to 5 output, are converted to an electric power by the generators 6 to 11, and finally utilized as mechanical power by which the screws 33 to 36 are operated at variable speeds via the common distribution buses 12, 13, the transformer 37, the power conversion devices 18 to 22, the induction motors 23 to 27, and the rotary shafts 28 to 32. Furthermore, a part of the mechanical powers, which the diesel engines 1 to 5 output, are supplied to the other load devices connected to low voltage distribution systems 16, 17.

In addition, although not shown, breakers are provided between the generators 6 to 11 and the common distribution buses 12, 13, and between the transformer 37 (there are 4 transformers) and the common distribution buses 12, 13, respectively. In the case where error occurs on the generator side or the induction motor side, a breaker at the place relevant to the error is made open, and insulated from the common distribution buses 12, 13.

In an electric propulsion system employing the motor drive system, as compared with the conventional propulsion system in which screws are directly driven by the diesel engines, advantages exist in, e.g., less vibration, and easy and efficient control of a rotational direction or the number of revolutions of screws. Thus, this motor drive system is increasingly applied to a luxury liner that gives importance to comfortable traveling on-board, or an icebreaker that repeats going back and forth.

Moreover, in a LNG plant for liquefying a natural gas, conventionally a mechanical power generation apparatus such as gas turbine or steam turbine has been used in order to drive compressors for use in liquefying equipment. However, in view of advantages of less exhaust gas or high efficiency, the application of a motor drive system of the same kind as the marine electric propulsion system is being started. This motor drive system for LNG plant is arranged such that, for example, with reference to Fig. 10, the screws 33 to 36 are replaced with compressors.

The conventional motor drive system is arranged as mentioned above. In the case where the diesel engine 1 goes wrong during the operation, the breaker that is located between the generator 6 and the common distribution bus 12 is made open. On the other hand, as for the remaining four diesel engines 2 to 5, loads thereof are increased and engine speeds thereof are decreased due to the fact a mechanical power is not supplied from the diesel engine 1. Resultantly, output voltages from the generator 7 to 11, eventually amplitude or frequency of voltages of the common distribution buses 12, 13 are reduced. When the amplitude or frequency is decreased to not more than a lower limit value having been set preliminarily, error occurrence in the system is determined, the breakers between the generators 7 to 11 and the common distribution buses 12, 13 are made open. As a result, a problem of system down, that the supply of mechanical power to the screws 33 to 36 is stopped, takes place.

Whereas, in the case where a power conversion circuit 18 goes wrong, the breaker located between the transformer 37 and the common distribution bus 12 is made open. In this case, due to the fact that mechanical power is not supplied to the screw 33, loads of the diesel engines 1 to 5 are reduced, and engine speed thereof comes to rise. Resultantly, an output voltage from the generators 6 to 11, eventually amplitude or frequency of voltages of the common distribution buses 12, 13 comes to rise. When the amplitude or frequency rise to not less than an upper limit value having been set preliminarily, error occurrence in the system is determined, the breakers between the generators 6 to 11 and the common distribution buses 12, 13 are made open. As a result, a problem of system down, that the supply of mechanical power to the screws 33 to 36 is stopped, takes place.

Normally, in the diesel engine, adjusting a fuel supply (so-called governor control) makes an engine speed control, and controlling an exciting current in the generator makes an output voltage amplitude control. That is, frequency variation in voltage of the common distribution buses 11, 12 is suppressed by the governor control of a diesel engine, and the amplitude variation is suppressed by the exciting current control of a generator. However, since a response speed of these governor control and exciting current control is of second order and is slow, it is difficult to suppress to a problem-free level the frequency variation or amplitude variation in common distribution bus voltage that occurs in the case where at least one of diesel engines or generators goes wrong, thus being susceptible to the occurrence of problem of system down.

In particular, in a motor drive system for marine electric propulsion or LNG plant, it is desirable that required number of diesel engines, generators, power conversion devices or inductionmotors is small. Therefore, any failure of one diesel engine or generator largely affects the amplitude and frequency variation in common distribution bus voltage.

The present invention was made to solve the above-mentioned problems and has an object of making a response speed higher to suppress the frequency variation or amplitude variation in common distribution bus voltage to a problem-free level capable of avoiding system down.

### Disclosure of Invention

A motor drive system according to the present invention includes: mechanical power generation apparatuses outputting mechanical power; a plurality of generators that are driven by the mentioned mechanical power generation apparatuses respectively and generate AC power respectively; a common distribution bus to which output terminals of the mentioned plurality of generators are connected in parallel; a plurality of power conversion devices of which input terminals are connected to the mentioned common distribution bus, and which output an AC power of variable amplitude and variable frequency; and a plurality of electric motors of which are connected to the mentioned power conversion devices respectively, and which drive load machines respectively.

In particular, the mentioned each power conversion device includes frequency control means for detecting a frequency of the mentioned common distribution bus, making compensation to reduce an upper limit value of a current command value of a converter of the mentioned each power conversion device in accordance with a decrease of the mentioned detected frequency from a predetermined value, and controlling an active power to be exchanged between the mentioned each power conversion device and the mentioned common distribution bus, thereby controlling a frequency of the mentioned common distribution bus to be a predetermined value.

Further, the mentioned each power conversion device includes DC voltage control means for detecting an output DC voltage of the mentioned converter, making compensation to reduce a command value for speed control of the mentioned each motor in accordance with a decrease of the mentioned detected DC voltage from a predetermined value, and controlling an active powertobeexchangedbetweenthementionedeachpowerconversion device and the mentioned each motor, thereby controlling the mentioned output DC voltage to be a predetermined value.

As a result, it is possible to quicken a response speed to suppress the frequency variation or the amplitude variation in common distribution bus voltage to a problem-free level capable of avoiding system down. Further, a rotational speed of the motor is made to reduce in accordance with decrease of frequency of the common distribution bus, thereby enabling to suppress an electric power, which the loads consume. Consequently, it is possible to suppress the decrease of DC voltage, and to maintain a frequency of the common distribution bus to be not less than a predetermined value.

Another motor drive system according to the present invention includes: mechanical power generation apparatuses outputting mechanical power; a plurality of generators that are driven by the mentioned mechanical power generation apparatuses respectively and generate AC power respectively; a common distribution bus to which output terminals of the mentioned plurality of generators are connected in parallel; a plurality of power conversion devices of which input terminals are connected to the mentioned common distribution bus, and which output an AC power of variable amplitude and variable frequency; and a plurality of electric motors of which are connected to the mentioned power conversion devices respectively, and which drive load machines respectively.

In particular, the mentioned each power conversion device includes frequency control means for detecting a frequency of the mentioned common distribution bus, making compensation to reduce an upper limit value of a current command value of a converter of the mentioned each power conversion device in accordance with a decrease of the mentioned detected frequency from a predetermined value, and controlling an active power to be exchanged between the mentioned each power conversion device and the mentioned common distribution bus, thereby controlling a frequency of the mentioned common distribution bus to be a predetermined value.

Further, the mentioned each power conversion device includes voltage control means for detecting a voltage of the mentioned common distribution bus, and controlling a reactive power to be exchanged between the mentioned each power conversion device and the mentioned common distribution bus in accordance with a deviation between the mentioned detected voltage and a reference voltage of the mentioned common distribution bus, thereby controlling a voltage of the mentioned common distribution bus to be the mentioned reference voltage.

Furthermore, the mentioned each power conversion device includes DC voltage control means for detecting an output DC voltage of the mentioned converter, making compensation to reduce a command value for speed control of the mentioned each motor in accordance with a decrease of the mentioned detected DC voltage from a predetermined value, and controlling an active power to be exchanged between the mentioned each power conversion device and the mentioned each motor, thereby controlling the mentioned output DC voltage to be a predetermined value.

As a result, it is possible to quicken a response speed to suppress the frequency variation or the amplitude variation in common distribution bus voltage to a problem-free level capable of avoiding system down. Further, the frequency of the common distribution bus is maintained so as to suppress the decrease from a predetermined value, and a voltage of the common distribution bus is maintained, thus enabling to achieve a continuous operation of the motors more stably.

### Brief Description of Drawings

Fig. 1 is a schematic view showing a motor drive system according to a first preferred embodiment of the present invention.
Fig. 2 is a timing chart showing operation situations of bus voltage, bus frequency and load current according to the first embodiment.
Fig. 3 is a schematic view showing a motor drive system according to a second embodiment.
Fig. 4 is a schematic view showing a motor drive system according to a third embodiment.
Fig. 5 is a schematic view showing a motor drive system according to a fourth embodiment.
Fig. 6 is a timing chart showing operation situations of bus voltage, bus frequency, and load current when it is difficult to suppress variation in bus voltage.
Fig. 7 is a timing chart showing operation situations of bus voltage, bus frequency, and load current in the case of applying the fourth embodiment.
Fig. 8 is a schematic view showing a motor drive system according to a fifth embodiment.
Fig. 9 is a schematic view showing a motor drive system according to a sixth embodiment.
Fig. 10 is a schematic view showing a motor drive system according to the prior art.

### Best Mode for Carrying out the Invention

### Embodiment 1.

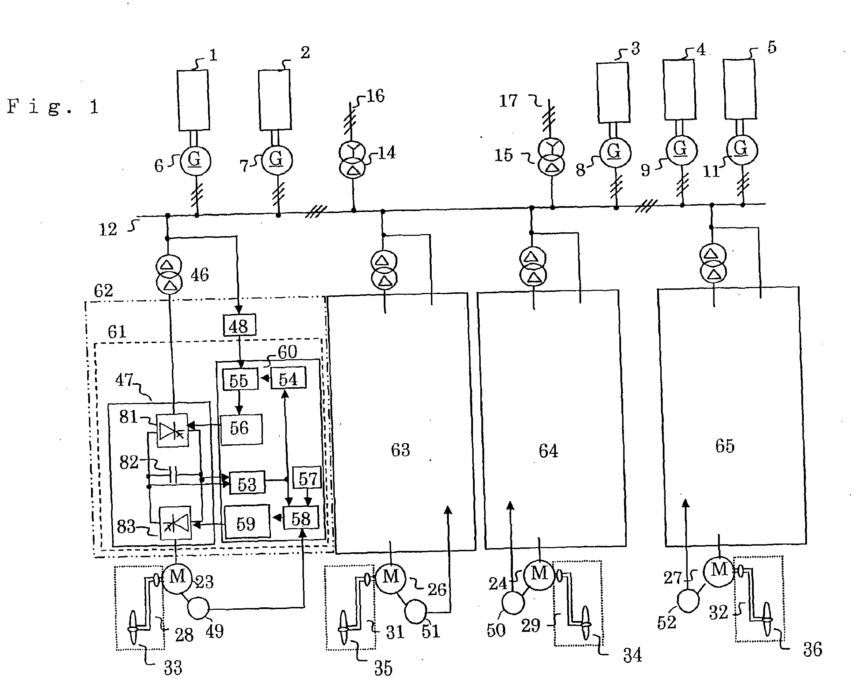

Fig. 1 is a schematic view showing a motor drive system according to a first preferred embodiment of the present invention. With reference to Fig. 1, a plurality of generators 6 to 11 are driven by diesel engines (mechanical power generation apparatuses) 1 to 5 that output mechanical powers respectively, connected in parallel to a common distribution bus 12 via breakers (not shown) , and supply generated powers to the common distribution bus 12. A plurality of induction motors 23 to 27 drive screws (load machines) 33 to 36 connected to respective rotary shafts 28 to 32. The induction motors 23 to 27 are respectively provided with speed detectors 49 to 52. The induction motor 23 is connected to the common distribution bus 12 through a transformer 46 and a control unit 62 of the motor. A breaker (not shown) is connected between the common distribution bus 12 and the transformer 46. The induction motors 24 to 27 are connected to the common distribution bus 12 through the breaker, transformer, and control devices 63 to 65 of respective motors in the same manner.

The control device 62 of the motor has a power conversion device 61, and is capable of controlling a reactive power and active power of input electric power in a main circuit 47 thereof. This main circuit 47 is formed of a converter of converter-inverter type (DC link type) including, for example, a high power-factor converter 81 that converts an AC power to DC power, a smoothing capacitor 82 that makes a converted DC power smooth, and a self-excited inverter 83 that converts a DC power to an AC power to drive the motor 23. In addition, the main circuit 47 may be formed of a conversion device of AC-AC conversion type with a matrix converter.

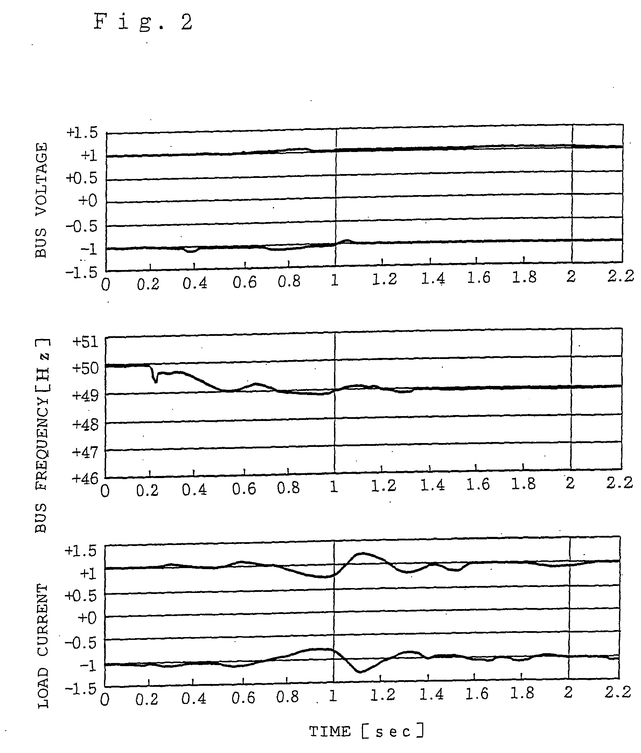

Numeral 48 designates a frequency detection circuit that detects a frequency from a voltage of the common distribution bus 12. Numeral 53 designates a DC voltage detector that detects a DC voltage of the converter 81 (DC voltage of the smoothing capacitor 82). Numeral 54 designates a DC voltage control circuit that receives a detected DC voltage of the DC voltage detector 53, and that controls a DC voltage of the converter 81 at a predetermined value based on a deviation from this predetermined value. Numeral 55 designates a current control circuit that compares a feedback frequency, being a detected value of the frequency detection circuit 48, with a predetermined value (for example, when letting a rated frequency 50 Hz, it is 49 Hz in the case of Fig. 2) , and makes compensation to reduce a current command value, being an output from the DC voltage control circuit 54, when a feedback frequency comes to be less than the mentioned predetermined value to control a current of the converter. Numeral 56 designates a control circuit of the converter that drives the converter 81 of the main circuit 47 with an output from the current control circuit 55. These DC voltage detector 53, DC voltage control circuit 54, frequency detection circuit 48, current control circuit 55, and control circuit 56 of the converter form frequency control means.

Numeral 57 designates a speed command setting circuit that sets or receives a speed command value with the external command. Numeral 58 designates a speed control circuit that operates a feedback speed with signals of the speed detector 49, as well as receives a speed command value, being an output from the speed command setting circuit 57, operates a deviation between these speed command value and feedback speed, and operates a current command value of the inverter 83 of the main circuit 47 so that this deviation may be eliminated. This speed control circuit 58 is a speed control circuit that receives a detected DC voltage, being an output from the DC voltage detector 53, makes compensation to reduce a speed command value, being an output from the speed command setting circuit 57, when this detected DC voltage comes to be less than a predetermined value, operates a deviation between a speed command value having been compensated to reduce and a feedback speed, and operates a current command value of the inverter 83 so that this deviation may be eliminated. Numeral 59 designates a control circuit that receives an output from the speed control circuit 58, and controls the inverter 83 of the main circuit 47 having a control function to control a rotational speed of the motor 23. These speed command setting circuit 57, speed detector 49, speed control circuit 58, DC voltage detector 53, and control circuit 59 form DC voltage control means. Numeral 60 designates a control unit controlling the main circuit 47 of the power conversion device 61. Numerals 63 to 65 designate control units of the motor having the same control function as the control unit 62 of the motor. In addition, a part of electric powers from the common distribution bus 12 is supplied to the other load devices connected to low-voltage distribution systems 16, 17 via transformers 14, 15.

Now, operations of Fig. 1 are described. A power generation system generates an electric power so as to output an AC power of a predetermined frequency and voltage. For example, in the case where an electric power, which loads consume, is increased within a rated range of the power generation system, a frequency and voltage of the common distribution bus 12 are maintained at a predetermined value by increasing an output from the diesel engines (prime movers) 1 to 5 to make an output power from the generators 6 to 11 equal to a power consumption.

The control unit 62 of a motor performs drive control of the motor 23 so that a rotational speed of the motor 23 is a speed command value. An AC power is received from the control unit 62 of the motor and the transformer 46, a speed command value is received from outside, and an AC power of a variable amplitude and variable frequency that drives the motor 23 is outputted based on a speed command value, being an output from the speed command setting circuit 57.

The active current control circuit 55 of a high power-factor converter makes compensation to carry out the subtraction operation of an output command value from the current control circuit 55 of the high power-factor converter until it becomes a current value equivalent to an active power necessary to maintain a frequency of the common distribution bus 12, that is detected by the frequency detection circuit 48, at a predetermined value, and provides the current value to the converter control circuit 56 as a control command.

The control circuit 56 of a high power-factor converter performs the control so that a DC voltage is a desired value. Specifically, a DC voltage of the converter 81 that is detected by the DC voltage detector 53 and a predetermined value (voltage value) are compared with the DC voltage control circuit 54, and a current command value is operated and outputted so that a deviation thereof is eliminated. The current control circuit 55 drives and controls the converter control circuit 56 so as to be the foregoing current command value. At this time, in the case where a frequency of the common distribution bus 12 that is detected by the frequency detection circuit 48 comes to be less than a predetermined value, an upper limit value of a current command value of the DC voltage control circuit 54 is operated to reduce in accordance with a decrease from the predetermined value thereby controlling an active current. Thus, an active power to be exchanged between the power conversion device and the common distribution bus is controlled, thereby controlling a frequency of the common distribution bus to be a predetermined value. In this case, when a power consumption of the motor 23 is larger than an input active power of the converter, DC voltage will drop.

The control circuit 59 of the inverter 83 performs drive control of the motor 23 so that a rotational speed of the motor 23 is a speed command value. Specifically, a rotational speed that is detected by the speed detector 49 is compared with a feedback speed and a speed command value that are obtained by operation at the speed control circuit 58, and a current command value is operated so that a deviation thereof is eliminated, and the main circuit 47 is driven. At this time, when a DC voltage that is detected by the DC voltage detector 53 comes to be less than a predetermined value, the operation is performed so as to lower a speed command value of the speed command setting circuit 57 in accordance with a decrease from this predetermined value to provide a current command value of the motor 23 to the control circuit 59 of the inverter. Thus, an active power to be exchanged between the power conversion device and the motor is controlled, whereby an output DC voltage from the converter 8 comes to be at a predetermined value.

In the first embodiment, as for load consumption power characteristics of wind/water power-applying machinery (for example, square torque load machines such as marine screw, compressor, and blower), a power consumption is changed increasing at a rate of cube of a rotational speed; therefore a rotational speed of the motor 23 is made to reduce in accordance with the decrease of a frequency of the common distribution bus 12, thereby enabling to suppress an electric power which loads consume. As a result, drop of a DC voltage canbe suppressed, and secondarily a frequency of the common distribution bus 12 can be maintained to be not less than a predetermined value. Fig. 2 shows these facts, and in which although a frequency decreases after the occurrence of over-load, the frequency is maintained at a predetermined value, and the continued operation is achieved. Bus voltages of axis of ordinates are indicated with a rated bus voltage being 1. Bus frequencies [Hz] are indicated when a bus rated frequency is 50Hz. Load currents are represented with a rated load current being 1. Each axis of abscissas represents time period [sec].

### Embodiment 2.

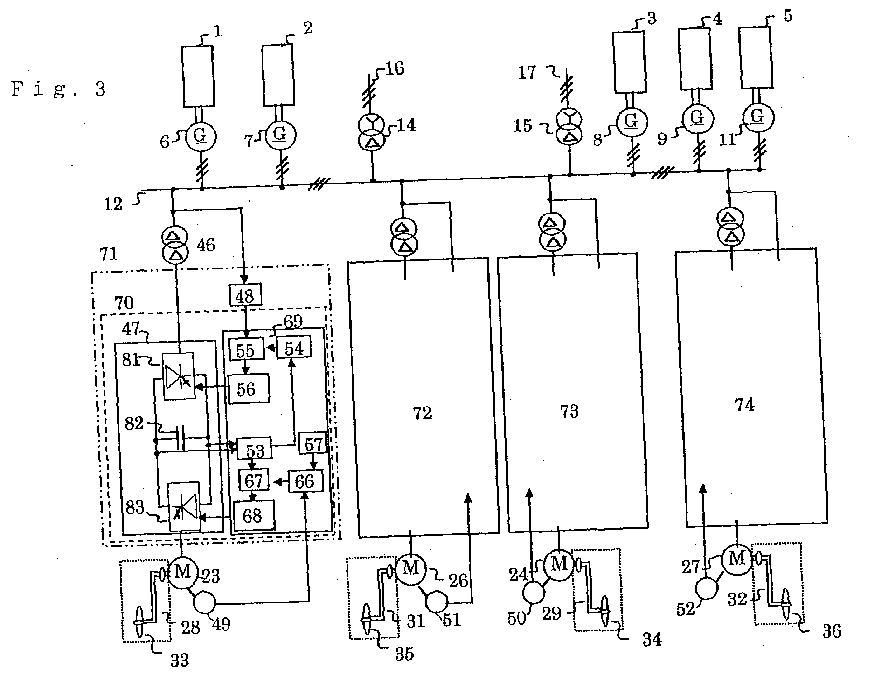

Fig. 3 is a schematic view showing a motor drive system according to a second preferred embodiment. With reference to Fig. 3, the same reference numerals as in Fig. 1 indicate the same or like parts as in Fig. 1. As shown in Fig. 3, in a control unit 71 of an electric motor, a power conversion device 70 has DC voltage control means for outputting to an inverter 83. This DC voltage control means is formed of a speed command setting circuit 53, a speed detector 49, a speed control circuit 66, a DC voltage detector 53, a current control circuit 67, and a control circuit 68. Numeral 69 designates a control unit. Motors 24 to 27 are likewise connected to the common distribution bus 12 via breakers (not shown) , transformers, and control units 72 to 74 of motors respectively.

The current control circuit 67 receives a DC voltage that is detected by the DC voltage detector 53, and when this DC voltage comes to be less than a predetermined value, the current control circuit 67 provides a command of lowering an upper limit value of a current command value of the current control circuit 67 in accordance with a decrease from this predetermined value. The speed control circuit 66 operates a feedback speed with signals of the speed detector 49, as well as receives a speed command value, being an output from the speed command setting circuit 57, operates a deviation between these speed command value and feedback speed, and provides a current command value to the current control circuit 67 so as to eliminate this deviation. The current control circuit 67 provides a current command value that is obtained at the speed control circuit 66 to the control circuit 68 of a main circuit 47 as it is on condition that a detected DC voltage of the DC voltage detection circuit 53 is within a predetermined value. However, in the case where a DC voltage is decreased, the current control circuit 67 controls to limit a current command value so that the variation in DC voltage is within a predetermined value (voltage value).

According to the second embodiment, a bus frequency of the common distribution bus 12 is detected, and a power consumption (current) of the motor 23 of a power conversion device is directly reduced. Accordingly, since a power consumption can be controlled even in case of load machines other than wind/water power-applyingmachines, it is possible to suppress the decrease in frequency of the common distribution bus 12, and it is also possible to continue the operation of the motors, thereby enabling to achieve more stable operation of the motor.

### Embodiment 3.

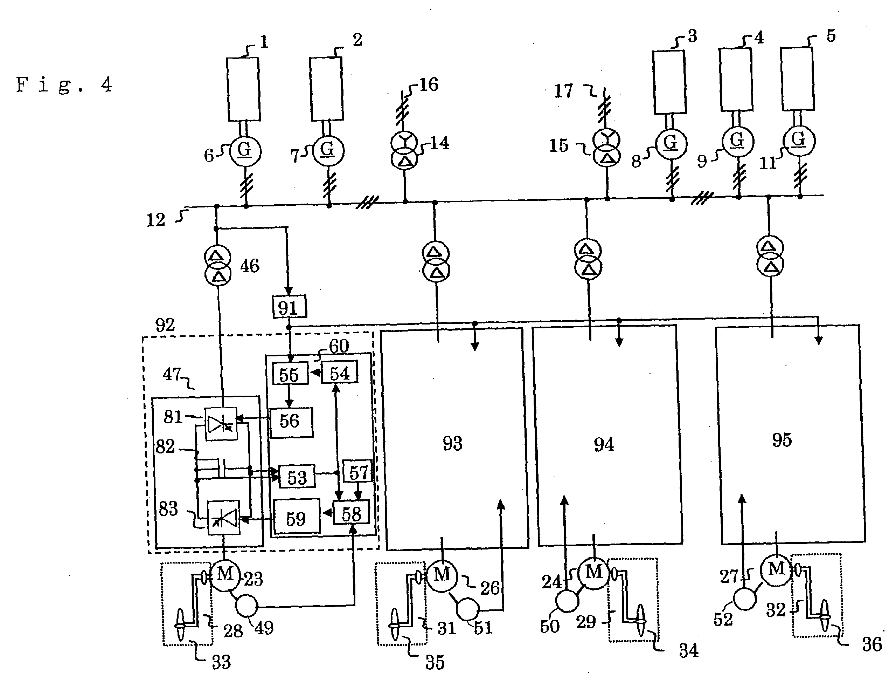

Fig. 4 is a schematic view showing a motor drive system according to a third preferred embodiment. With reference to Fig. 4, the same reference numerals as in Fig. 1 indicate the same or like parts as in Fig. 1. According to the third embodiment, a frequency of the common distribution bus 12 is detected all at once by a frequency detection circuit 91, and this detected feedback frequency is supplied to control units 92 to 95 of respective motors. The other arrangements are the same as in the foregoing first embodiment.

According to the third embodiment, since a frequency of the common distribution bus 12 is detected all at once and is supplied to the control units 92 to 95 of respective motors, it is possible to prevent instability of the control due to fluctuation in characteristics of individual frequency detection circuits, and to maintain more stably a frequency of the common distribution bus 12 to be not less than a predetermined value.

Additionally, also in the second embodiment, it is preferable that a frequency of the common distribution bus 12 is detected all at once by the frequency detection circuit 91 instead of individual frequency detection circuits 48, and this detected feedback frequency is supplied to the control units of respective motors. Thus, also in the second embodiment, it is possible to prevent control instability due to fluctuation in characteristics of individual frequency detection circuits, and to maintain more stably a frequency of the common distribution bus 12 to be not less than a predetermined value.

### Embodiment 4.

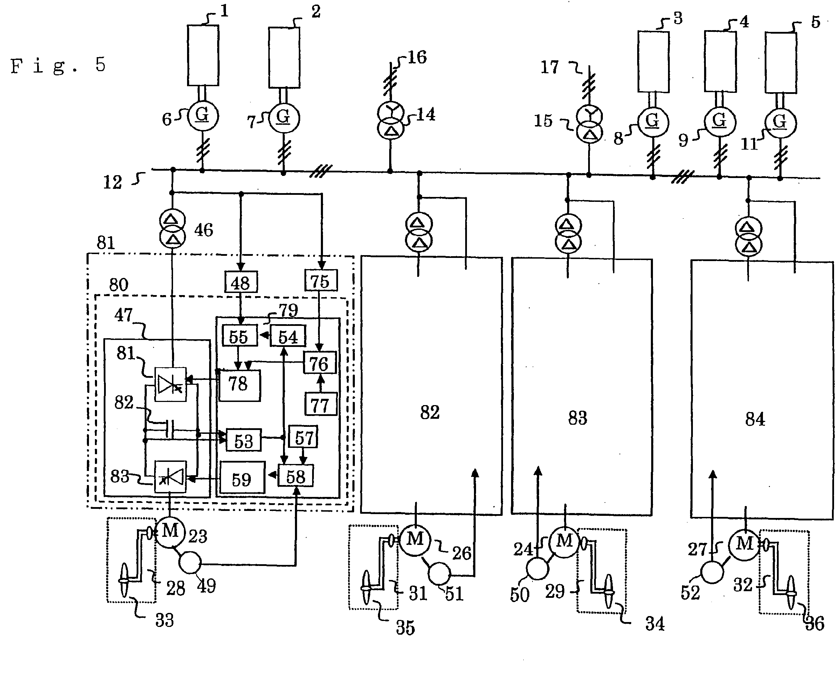

Fig. 5 is a schematic view showing a motor drive system according to a fourth preferred embodiment. With reference to Fig. 5, the same reference numerals as in Fig. 1 indicate the same or like parts as in Fig. 1. As shown in Fig. 5, a control unit 81 of an electric motor includes a reactive power command circuit 76 that detects a bus voltage of the common distribution bus 12 with a voltage detector 75, operates a reactive power command value, which a power conversion device 80 generates, in accordance with a deviation between the foregoing detected voltage and a reference voltage of the common distribution bus 12 so as to eliminate this deviation, and outputs it to a control circuit 78 of a converter of the power conversion device 80. Numeral 79 designates a control unit.

The reactive power command circuit 76 detects a voltage of the common distribution bus 12 with the voltage detector 75, operates a reactive power output command value corresponding to an reactive power necessary to maintain this detected voltage at a reference voltage of the common distribution bus 12 that is set by the voltage setting device 77, and provides it to a converter control circuit 78 of the power conversion device 80.

These voltage detector 75, voltage setting device 77, reactive power command circuit 76, and control circuit 78 of the converter form voltage control means. Further, in the same manner as in the first embodiment, a DC voltage detector 53, DC voltage control circuit 54, frequency detection circuit 48, current control circuit 55, and control circuit 78 of the converter form frequency control means. Furthermore, in the same manner as in the first embodiment, a speed command setting circuit 57, speed detector 49, speed control circuit 58, DC voltage detector 53, and control circuit 59 form DC voltage control means. In addition, the other control units 82 to 84 of motors are arranged in the same manner as the control unit 81 of the motor.

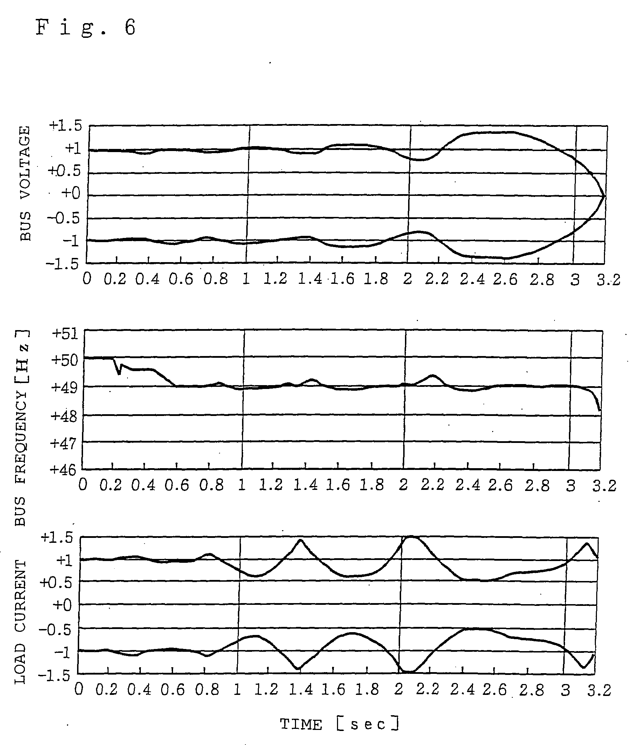

In the case where the voltage variation that occurs at the time of overload can be suppressed by an AC voltage control circuit (e.g., exciting current control circuit), which a generator system normally comprises, it is possible to continue the operation by suppressing a power consumption to maintain a frequency at a predetermined value as shown in Fig. 3. However, in the case where it is difficult to suppress the voltage variation with an AC voltage control circuit, which a power generation system comprises, the bus voltage variation augments by degrees, and eventually the power generation system comes to be stopped as shown in Fig. 6. Fig. 6 is a timing chart showing operation situations of a bus voltage, bus frequency, and load current in the case where suppressing the bus voltage variation is difficult.

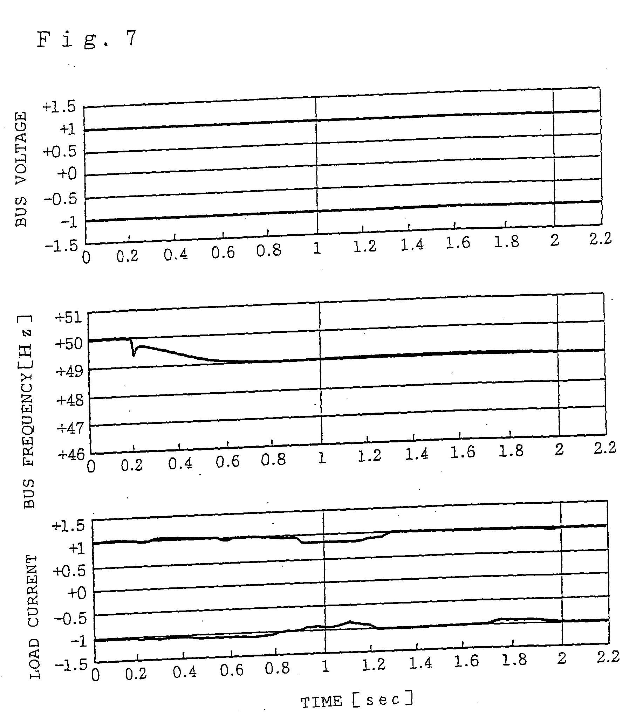

According to the fourth embodiment, since a voltage of the common distribution bus 12 is detected and the output control of a reactive power of the power conversion device 80 is carried out, a voltage of the common distribution bus 12 can be maintained at a predetermined value. Fig. 7 indicates these facts. Fig. 7 is a timing chart showing operation situations of a bus voltage, bus frequency, load current in the case of application of this fourth embodiment. A frequency of the common distribution bus 12 is maintained so as to suppress the decrease from a predetermined value, and a voltage of the common distribution bus 12 is maintained at a reference voltage, thus achieving the continued operation of motors more stably.

### Embodiment 5.

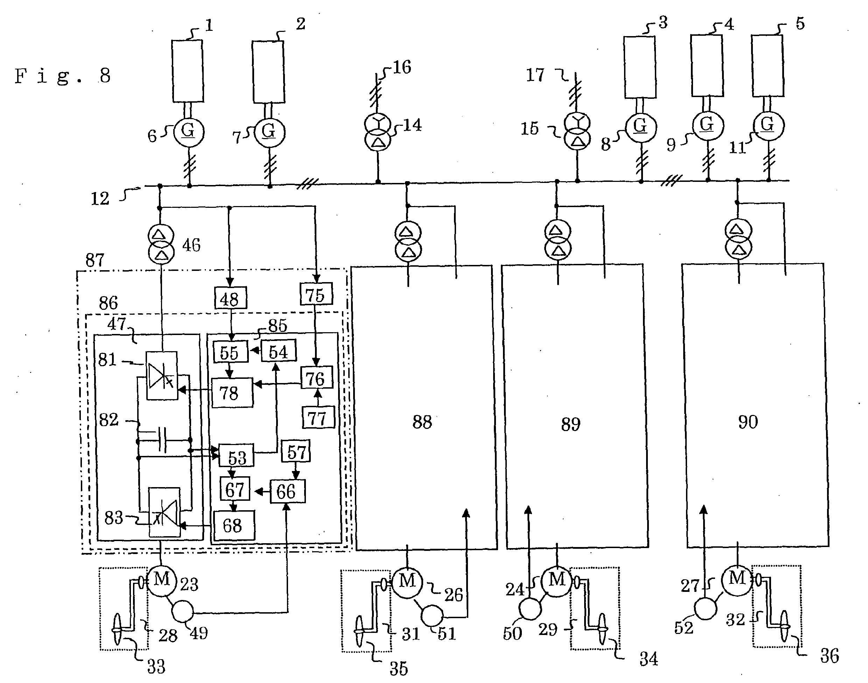

Fig. 8 is a schematic view showing a motor drive system according to a fifth embodiment. With reference to Fig. 8, the same reference numerals as in Fig. 3 or 5 indicate the same or like parts as in Fig. 3 or 5. As shown in Fig. 8, in addition to the arrangement of the second embodiment (Fig. 3), a control unit 87 of an electric motor includes a reactive power command circuit 76 that detects a bus voltage of the common distribution bus 12 with a voltage detector 75, operates a reactive power command value corresponding to a necessary reactive power in accordance with a deviation between this detected voltage and a reference voltage of the common distribution bus 12 so as to eliminate this deviation, and outputs it to a control circuit 78 of the converter of a power conversion device 86. Numeral 85 designates a control unit. These voltage detector 75, voltage setting device 77, reactive power command circuit 76, and control circuit of the converter form voltage control means.

Further, in the same manner as in the second embodiment, the DC voltage detector 53, the DC voltage control circuit 54, the frequency detection circuit 48, the current control circuit 55, and the control circuit 78 of a converter form frequency control means. Furthermore, in the same manner as in the second embodiment, the speed command setting circuit 57, the speed detector 49, the speed control circuit 66, the DC voltage detector 53, the current control circuit 67, and the control circuit 68 form DC voltage control means. In addition, the other control units 88 to 90 of motors are arranged in the same manner as the control unit 87 of the motor.

In this fifth embodiment, since a bus voltage of the common distribution bus 12 is detected and the output control of a reactive power is carried out, in addition to the second embodiment, a voltage of the common distribution bus 12 can be maintained at a predetermined value. Therefore, also as for driving load machines of constant torque, a frequency of the common distribution bus 12 is maintained so as to suppress the decrease thereof from a predetermined value, and a bus voltage of the common distribution bus 12 is maintained to be a predetermined value, thus enabling to achieve the continued operation of motors more stably.

### Embodiment 6.

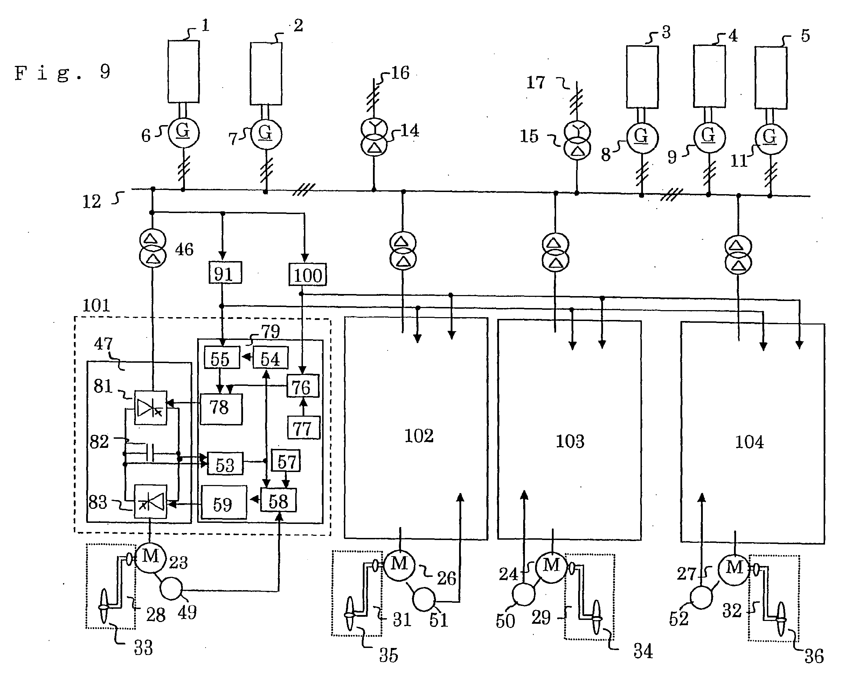

Fig. 9 is a schematic view showing a motor drive system according to a sixth embodiment. With reference to Fig. 9, the same reference numerals as in Fig. 5 indicate the same or like parts as in Fig. 5. As shown in Fig. 9, in this sixth embodiment, a frequency of the common distribution bus 12 is detected all at once with a frequency detection circuit 91, and this detected feedback frequency is supplied to control units 101 to 104 of respective motors. Further, a bus voltage of the common distribution bus 12 is detected all at once with a voltage detector 100, and this detected feedback bus voltage is supplied to the control units 101 to 104 respective motors. The other arrangements are the same as in the fourth embodiment (Fig. 5).

A reactive current control circuit 55 of a converter provides a command to a control circuit 78 of a high power-factor converter so as to lower a current command value when a bus frequency of the common distribution bus 12 that is detected by a frequency detection circuit 91 comes to be less than a predetermined value. A reactive power command circuit 76 detects a bus voltage of the common distribution bus 12 with a voltage detector 100, operates a reactive power output command value corresponding to a reactive power necessary for maintaining the foregoing detected voltage at a reference voltage of the common distribution bus 12 that is set by the voltage setting device 77, and provides it to the converter control circuit 78 of a power conversion device 80.

In this sixth embodiment, since a frequency of the bus voltage and a bus voltage of the common distribution bus 12 are detected all at one time, and supplied to each power conversion device (control units 101 to 104 of motors), the motor drive system according to sixth embodiment is free from the influence of fluctuations in frequency detection circuit or voltage detector, thus enabling to achieve a more stable operation of motors.

In addition, it is preferable that a frequency of the common distribution bus 12 is detected all at once with the common frequency detection circuit 91 instead of the frequency detection circuits 48 of the fifth embodiment (Fig. 8), and this detected feedback frequency is supplied to the control units of respective motors. Further, it is also preferable that a bus voltage of the common distribution bus 12 is detected all at once with the voltage detector 100 in common, and this detected feedback bus voltage is supplied to the control units of respective motors.

### Industrial Applicability

The present invention is suitable for use in a motor drive system for marine electric propulsion or a motor drive system for LNG plant.

## Claims

1. A motor drive system including: mechanical power generation apparatuses outputting mechanical power; a plurality of generators that are driven by said mechanical power generation apparatuses respectively and generate AC power respectively; a common distribution bus to which output terminals of said plurality of generators are connected in parallel; a plurality of power conversion devices of which input terminals are connected to said common distribution bus, and which output an AC power of variable amplitude and variable frequency; and a plurality of electric motors of which are connected to said power conversion devices respectively, and which drive load machines respectively;
**characterized in that** said each power conversion device comprises frequency control means for detecting a frequency of said common distribution bus, making compensation to reduce an upper limit value of a current command value of a converter of said each power conversion device in accordance with a decrease of said detected frequency from a predetermined value, and controlling an active power to be exchanged between said each power conversion device and said common distribution bus, thereby controlling a frequency of said common distribution bus to be a predetermined value; and
said each power conversion device comprises DC voltage control means for detecting an output DC voltage of said converter, making compensation to reduce a command value for speed control of said each motor in accordance with a decrease of said detected DC voltage from a predetermined value, and controlling an active power to be exchanged between said each power conversion device and said eachmotor, thereby controlling said output DC voltage to be a predetermined value.

2. The motor drive system according to claim 1, wherein a command value of the speed control of said each motor is an upper limit value of a current command value, being an output of the speed control of said each motor.

3. The motor drive system according to claim 1 or 2, wherein a frequency of said common distribution bus is detected with a common frequency detection circuit from said common distribution bus, and a detected frequency is provided to said each power conversion device respectively.

4. A motor drive system including: mechanical power generation apparatuses outputting mechanical power; a plurality of generators that are driven by said mechanical power generation apparatuses respectively and generate AC power respectively; a common distribution bus to which output terminals of said plurality of generators are connected in parallel; a plurality of power conversion devices of which input terminals are connected to said common distribution bus, and which output an AC power of variable amplitude and variable frequency; and a plurality of electric motors of which are connected to said power conversion devices respectively, and which drive load machines respectively;
**characterized in that** said each power conversion device comprises frequency control means for detecting a frequency of said common distribution bus, making compensation to reduce an upper limit value of a current command value of a converter of said each power conversion device in accordance with a decrease of said detected frequency from a predetermined value, and controlling an active power to be exchanged between said each power conversion device and said common distribution bus, thereby controlling a frequency of said common distribution bus to be a predetermined value;
said each power conversion device comprises voltage control means for detecting a voltage of said common distribution bus, and controlling a reactive power to be exchanged between said each power conversion device and said common distribution bus in accordance with a deviation between said detected voltage and a reference voltage of said common distribution bus, thereby controlling a voltage of said common distribution bus to be said reference voltage; and
said each power conversion device includes DC voltage control means for detecting an output DC voltage of said converter, making compensation to reduce a command value for speed control of said each motor in accordance with a decrease of said detected DC voltage from a predetermined value, and controlling an active power to be exchanged between said each power conversion device and said each motor, thereby controlling said output DC voltage to be a predetermined value.

5. The motor drive system according to claim 4, wherein a command value of the speed control of said each motor is an upper limit value of a current command value, being an output of the speed control of said each motor.

6. The motor drive system according to claim 4 or 5, wherein a voltage of said common distribution bus is detected with a common voltage detector from said common distribution bus, and a detected voltage is provided to said each power conversion device respectively.
